# EUROPEAN PATENT SPECIFICATION

(11) **EP 2 490 054 B1**
(45) Date of publication and mention of the grant of the patent: **05.09.2018**
(21) Application number: 12154309.4
(22) Date of filing: 07.02.2012
(51) Int. Cl.: G02B 6/25

(54) **Device and method for evacuating debris from an optical fiber**
Vorrichtung und Verfahren zum Entfernen von Ablagerungen von einer optischen Faser
Dispositif et procédé pour l'évacuation des débris d'une fibre optique

(30) Priority: 17.02.2011 US 201161443942 P
(43) Date of publication of application: 22.08.2012
(73) Proprietor: CommScope Connectivity Belgium BVBA, 3010 Kessel-Lo (BE)
(72) Inventor: Hilderink, André Johannes Maria, 7481 CE Haaksbergen (NL); Jacobs, Hernes, 7596 LZ Rossum (NL); Krechting, Petrus Theodorus, 7532 AJ Enschede (NL); Van Assenbergh, Karel Johannes, 49767 Twist (DE); De Jager, Pieter Cornelis Johan, 7641 EL Wierden (NL)
(74) Representative: Patentanwälte Bressel und Partner mbB

(56) References cited:
- EP-A1- 2 209 026
- JP-A- 7 287 124
- JP-A- H0 926 512
- US-A- 5 735 013
- Nn: "INSTALLATION INSTRUCTIONS Single-Mode OPTI-JACK(TM) Optical Fiber Connector Dust Cover Jack Housing Jack Cap 900 m Boot 3mm Boot Ferrule Assemblies Crimp Sleeves Boot Plug Housing Crimp Sleeves Ferrule Assemblies", , 1 January 1998 (1998-01-01), pages 1-8, XP055309375, Retrieved from the Internet: URL:http://www.kassex.cz/files/default/con tent/knihovna/pn107a.pdf [retrieved on 2016-10-11]
- Nn: "ST Opti-Crimp Multimode Fiber Optic Connector Installation Instructions", , 1 January 2006 (2006-01-01), page 7, XP055309468, Retrieved from the Internet: URL:https://objects.eanixter.com/PD337509. PDF [retrieved on 2016-10-11]

## Description

### TECHNICAL FIELD

The present invention relates to a device and a method for evacuating debris from an optical fiber. The debris is generated by an operation on the optical fiber, such as a stripping operation, a cleaning operation, or a cleaving operation.

### BACKGROUND

Modern optical devices and optical communications systems widely use fiber optic cables. Optical fibers are strands of glass fiber processed so that light beams transmitted through the glass fiber are subject to total internal reflection so that a large fraction of the incident intensity of light directed into the fiber is received at the other end of the fiber.

Optical fibers usually have one or more coatings, for example a polymer coating made of acrylate or polyimide, to protect the surface of the fiber from chemical or mechanical damage. Several operations may be performed on the optical fibers that generate debris from the optical fibers.

These operations are performed e.g. to manufacture optical devices such as optical sensors and other optical communications network components. A first operation is to remove the coating or coatings at an end of the optical fiber, so that a bare end is obtained; this operation is known as stripping. After the stripping operation, the stripped end of the optical fiber may be cleaned to remove any remaining coating debris. The stripped end may then be cleaved to obtain a well-defined end face. Cleaving also generates debris, namely the cleaved end portion of the optical fiber. For cleaving, a precision cleave tool may be used, such as the one used in the RECORDsplice Cleaver and Assembly Tool (RCAT) (RECORDsplice is a trade mark of TE Connectivity). Cleaving may be done perpendicularly, in a plane perpendicular to the fiber axis; another possibility is an angled cleave, wherein the cleaving plane makes an angle, of e.g. 8 °, with the plane perpendicular to the fiber axis. Two cleaved fibers may be connected to each other. To connect the optical fibers, fusion splicing can be used. Fusion splicing melts the fiber ends together so that a permanent connection is made. An alternative for fusion splicing is mechanical splicing, wherein the fiber ends are aligned and mechanically held together. In mechanical splicing, ferruled connection systems and ferrule-less connection systems are known. Often, in mechanical splicing, a clear index matching material is used, such as an index matching gel that enhances the transmission of light across the joint.

JP 2001330737A discloses a method and a device for removal a coating from an optical fiber. The device includes a belt to evacuate the coating that is removed from the fiber.

JP 3246506A discloses an optical fiber cutter. The fiber is cleaved manually, and the cleaving debris is caught and evacuated by a sticky tape.

US 5253412 discloses a tip processing apparatus for jacketed optical fibers. The coating at the end of the optical fiber is removed and kept on the tip of the fiber. In a subsequent stage, two tapes of wiping cloth, positioned at opposite sides of the stripped fiber, are used to clean the fiber from remaining stripping debris. The wiping cloth is moistened with alcohol.

US 5 735 013 describes an apparatus for cleaning an optical fiber. One tape shaped cleaning member is used which is folded so as to cover the optical fiber and so that opposing surfaces of the cleaning member make contact when a lever is pushed downwards. The optical fiber is then cleaned by moving the optical fµiber as it is pinched between the opposing surfaces of the cleaning member. After the cleaning, the lever is raised and the opposing surfaces of the cleaning member are moved away from each other.

JPH 07 287 124 describes an apparatus for cleaning an optical fiber. Two cleaning tapes are used which are moved towards each other so that they make contact, to clean the fiber. After cleaning the two cleaning tapes are moved away from each other.

EP 2 209 026 describes an apparatus for processing a flat optical waveguide, the apparatus including a cleaner. Two cleaning members are used to clean the waveguide. These two cleaning members do not contact each other.

The instruction "INSTALLATION INSTRUCTIONS Single-Mode OPTI-JACK ™ Optical Fiber Connector Dust Cover Jack Housing Jack Cap 900 m Boot 3mm Boot Ferrule Assemblies Crimp Sleeves Boot Plug Housing Crimp Sleeves Ferrule Assemblies" shows an instruction of manually cleaning an optical fiber. It is described to clean the fiber using a lint-free wipe soaked in alcohol. In figure 3.2.1 the wipe is folded.

The instruction "ST Opti-Crimp Multimode Fiber Optic Connector Installation Instructions" shows manual cleaning of an optical fiber. In figure 4.1 the wipe is folded.

JPH 092 65 12 describes an apparatus for processing an optical fiber, the apparatus comprising a cleaning section. The cleaning section uses a single tape wound in such a way that the optical fiber is placed between opposing surfaces of the cleaning tape. A handle is operated to move the opposing surfaces of the cleaning tape towards each other so that they make contact. After the cleaning, the lever is raised and the opposing surfaces of the cleaning tape are moved away from each other.

A need still exists for an improved device and method for evacuating debris from an optical fiber.

### SUMMARY OF THE INVENTION

An object of the present invention is to provide alternative devices and/or methods for evacuating debris from an optical fiber. The debris is typically generated by an operation on the optical fiber, such as a stripping operation, a cleaning operation, or a cleaving operation.

An advantage of embodiments of the present invention can be that one or more deficiencies and problems associated with the prior art devices and methods can be eliminated or reduced by the devices and methods disclosed herein. Embodiments of the present invention provide an alternative device and method for evacuating debris from an optical fiber e.g. when the debris is generated by an operation on the optical fiber, such as a stripping operation, a cleaning operation, a cleaving operation. Embodiments of the herein disclosed devices and methods for evacuating debris from an optical fiber are reliable and convenient. Further, the disclosed device or method is particularly suitable to be integrated into an automated tool. Preferably, the debris is caught and evacuated in such a way that the device and its internal mechanisms are not soiled by the debris, or that soiling is substantially reduced, which is especially advantageous in an automated tool.

The invention provide a device for evacuating debris from an optical fiber according to claim 1 and a method for evacuating debris from an optical fiber according to claim 8.

According to one aspect of the invention, the device comprises a tape cartridge, comprising, besides two guiding elements respectively two tapes. Preferably, the tape cartridge can easily be exchanged and the tape is disposable. The tape is designed for cheapness and short-term convenience and preferably intended for single use. According to another aspect of the invention, the device includes, besides the guiding elements, an element to receive a tape cartridge. According to yet another aspect of the invention, the device functions without a tape cartridge; the tapes may e.g. be mounted in the device as tape rollers.

In these embodiments, the debris is trapped by two tapes, and then immediately caught between two mating sides of the two tapes, that form a sandwich, so that the debris is trapped safely between the tapes in the sandwich and cannot soil the device. The guiding elements that guide the tapes can be part of a tape cartridge, or they can be part of a device that is adapted to receive a tape cartridge, or they can be part of a device that functions without a tape cartridge, or some guiding elements can be part of a device that is adapted to receive a tape cartridge while other guiding elements are part of the tape cartridge itself.

The device for evacuating debris from the optical fiber includes a first driving element for driving a first tape and a second driving element for driving a second tape. The first and the second driving element may be adapted for evacuating the first and the second tape. Guiding elements for the first and for the second tape may be provided in the device and/or in a tape cartridge configured to co-operate with the device. The driving elements and/or the guiding elements may be adapted for driving the first and the second tape, and the guiding elements for guiding the first and the second tape, for trapping the debris between the first and the second tape, and for sandwiching the first and the second tape upon trapping the debris.

The device for evacuating debris from the optical fiber may include one or more systems to perform an operation that generates debris from the optical fiber. The device may include a system for performing debris generating operation such as a stripping operation, and/or a system for performing a cleaning operation, and/or a system for performing a cleaving operation.

In some embodiments, the device for evacuating debris from the optical fiber includes at least a first and a second heater for heating the optical fiber, and at least one a driving element for driving a the first and second tapes for contacting the optical fiber such that the tapes protect the heater from contacting the optical fiber, wherein the at least one driving element is adapted for evacuating the tapes and the debris collected by the tapes.

### Definitions

The term "fiber" as used herein relates to a single optical transmission element having a core having e.g. a diameter in the range from 8 to 10 µm, e.g. a diameter of 8 µm, and a cladding with e.g. a diameter in the range from 124 to 126 µm, e.g. a diameter of 125 µm, wherein the core is the central, light-transmitting region of the fiber, and the cladding is the material surrounding the core to form a guiding structure for light propagation within the core. The dimensions may of course be different; for multimode fibers, a core diameter of 50 µm or of 62.5 µm is most common. The core and cladding can be coated with a primary coating usually comprising one or more organic or polymer layers surrounding the cladding to provide mechanical and environmental protection to the light-transmitting region. The primary coating may have a diameter ranging e.g. between 200 and 300 µm. The core, cladding and primary coating usually are coated with a secondary coating, a so-called "buffer", a protective polymer layer without optical properties applied over the primary coating. The buffer or secondary coating usually has a diameter ranging between 300-1100 µm, depending on the cable manufacturer.

If all the coatings are removed at the end of the fiber over a certain length, so that only the core and cladding remain bare, the end of the fiber is "bare" as this is called in this document.

The term "stripping" as used herein relates to removing a coating from the optical transmission element.

The term "evacuate" as used herein relates to remove securely waste matter from the optical fiber so that the debris may not recontaminate the fiber.

The terms "automatically", "automatic", "automated" relate to a system or a method without manual intervention. Such an automatic system self-activates or is executed under programmed or specified conditions and performs specified functions. Moreover the execution is performed in a manner essentially independent of external influence or control.

### BRIEF DESCRIPTION OF THE DRAWINGS

Further features of the present invention will become apparent from the embodiments, examples and figures, wherein:
Figs. 1a-1b illustrate an example of a non-inventive one tape arrangement for use with a station where the optical fiber comprises or generates debris.
Fig. 2 schematically illustrates a device according to an embodiment of the invention that includes a tape cartridge;
Figs. 3a and 3b illustrate a stripping operation according to an embodiment of the invention, that is adapted to trap and evacuate debris;
Fig. 4a illustrates perpendicular tape transport and Fig. 4b axial tape transport according to embodiments of the invention;
Figs. 5a to 5e illustrate a stripping operation, with axial tape transport, according to an embodiment of the invention;
Fig. 6 shows an embodiment of a tape cartridge;

### DESCRIPTION OF EMBODIMENTS

Below, embodiments will be referred to in detail, examples of which are illustrated in the drawings.

The present invention is not limited to the described embodiments, but is limited only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is moreover to be understood that, in case parameter ranges are given which are delimited by numeric values, the ranges are deemed to include these limitation values, unless stated otherwise.

In the drawings, like reference numerals indicate like features; and a reference numeral appearing in more than one figure refers to the same element.

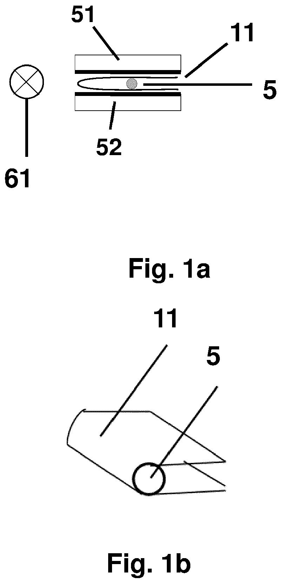

Fig. 1a illustrates a first tape arrangement for use with a debris forming station in accordance with a non-inventive example for better understanding of the present invention. For example, one tape 11 can be used so that the debris is trapped between two portions of the one tape 11. The station is adapted to form a tape sandwich, whereby the sandwich is formed by two different longitudinal portions of one tape 11 that are folded over with the fold being transverse to the tape to form a sandwich, and the debris, is evacuated in the direction of arrow 61. To achieve this, the tape is inserted between two clamps 51, 52 so that it folds over on itself longitudinally to thereby form a sandwich when the clamps are closed thus trapping debris.

Fig. 1b illustrates a second tape arrangement for use with a debris forming station in accordance with a non-inventive example for better understanding of the present invention. For example, one tape 11 can be used so that the debris is trapped between two portions of the one tape 11. The station is adapted to form a tape sandwich, whereby the sandwich is formed by two portions of one tape 11, as illustrated schematically in Fig. 1b, and the debris, is evacuated in the direction of arrow 61. To achieve this the tape can be guided so that it folds over on itself with a fold along a longitudinal axis to thereby form a wrap around the fiber 5. By closing the open sides of the wrap, e.g. by closing the sides by rollers, the sandwich is formed thus trapping debris.

The tape material preferably has high strength and good resistance to temperature up to e.g. 180 °C. Further it preferably has a low coefficient of friction with respect to glass, preventing high clamping forces on the fiber after the stripping operation. Tape of non-woven materials may be used, such as lens cleaning tissue. Especially in case of perpendicular tape transport, the tape may have a width of about 25 mm which is about the stripping length. The tape may also have markers which are used to wind the tape over the right distance and indicate the end of the tape. The tape may be carried in a cartridge that can be wider than the tape to accommodate debris protruding from the tape.

Other materials used as tape according to embodiments of the invention can for instance be Kapton tape, which is a polyimide film (poly[4,4'-oxydiphenylene- pyromellitimide]), and which can remain stable in a wide range of temperatures, from -273 to +400 °C. Also different other types of tape substrates can be used such as PET (polyethylene) which can be used at lower temperatures (up to 120 °C). In addition tapes consisting of a woven textile material can be used. For instance two types that are commercially available can be used: (1) Optipop RS, which is the tape material used in the optical connector cleaner Optipop R1 produced by NTT AT, and (2) a woven textile tape material as used in ReeiCiean 500 optical fiber connector cleaner produced by Korean company TheFibers Inc.

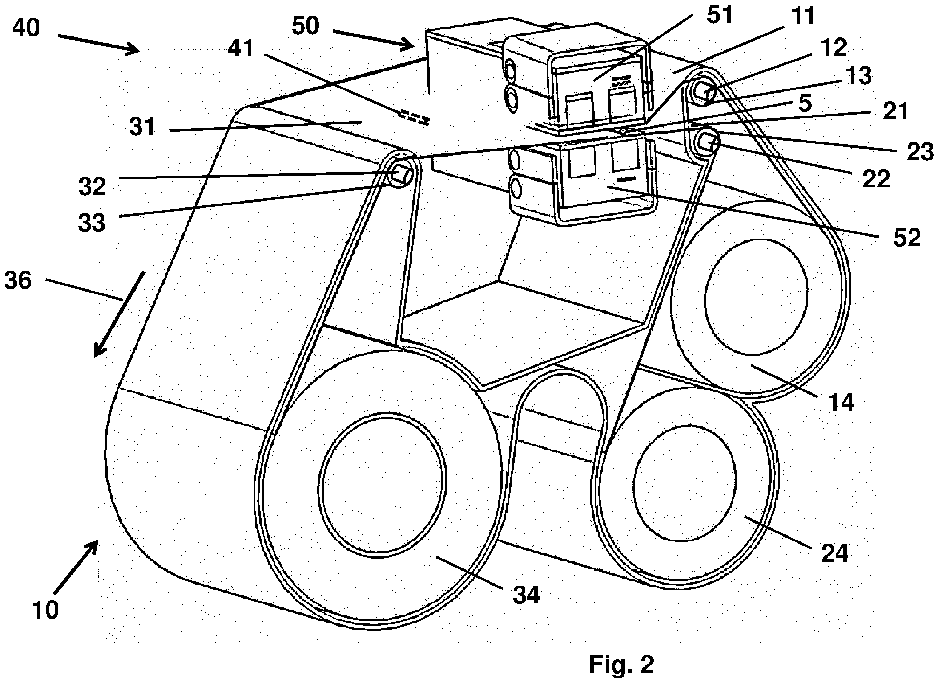

Fig. 2 schematically shows a device 40 for evacuating debris 41 from an optical fiber 5. In station 50, an operation is performed on an optical fiber 5 that generates debris 41. The debris is removed from the optical fiber 5 in station 50 and caught between a first tape 11 and a second tape 21. The first and the second tape form a sandwich 31 that is transported in the direction of arrow 36 and that evacuates the debris 41, i.e. is securely held such that the evacuated debris will not come into contact with the fiber again. In this embodiment, the device 40 includes a tape cartridge 10. The tape cartridge includes a first roller 14 with a supply of the first tape 11 and a second roller 24 with a supply of the second tape 21. Both tapes come together in the station 50, and after trapping the debris form tape sandwich 31 with the trapped debris 41, that is wound on take-up roller 34, and that thus evacuates the debris 41. In this embodiment, the first tape 11 is guided by guiding roller 13 and by a small roller (not shown) at an edge of heater 51 of station 50, and the second tape 21 is guided by guiding roller 23, while the sandwich 31 when completed is guided by guiding roller 33. The guiding rollers of the first and of the second tape are positioned such that the debris 41 is caught between the tapes 11, 21 in station 50. Guiding roller 13 is driven by a driving element 12, e.g. an electric motor, and guiding roller 23 is driven by driving element 22. Further, sandwich 31 is guided by guiding roller 33 and driven by driving element 32. The driving elements drive the guiding elements by any suitable method, e.g. the driving element may be concentric with the guiding element it drives. Preferably, the driving elements 12, 22 and 32, which are in the embodiment of Fig. 2, do not form part of the tape cartridge 10, but are part of the device 40. The tape cartridge 10 is preferably just a consumable that comprises the first and the second tape. A tape cartridge 10 of which the tapes were used up can then easily be replaced by a new, full cartridge. Using such a tape cartridge is thus very convenient. In another embodiment, one or more driving elements for the tapes may be part of the tape cartridge. It is preferred that the tape cartridge 10 comprises means for guiding the tapes. The path of the tapes, and the path of the sandwich, which is determined by the guiding means, is preferably such that the first 11 and the second 21 tape form a sandwich 31 immediately after the debris 41 is caught between the first and the second tape. In this way, the debris is safely evacuated, and cannot soil the device 40 or recontaminate the fiber 5. That the debris 41 is safely evacuated is especially advantageous when the device 40 is automated, or is integrated in an automated tool. Such an automated tool, for performing one or more operations on an optical fiber, is disclosed in US Provisional Application 61/443,942 filed on February 17, 2011.

Preferably, the first and/or second tape 11 or 21 has sticky or adhesive zones for contacting the other tape 21 or 11. One or both tapes may be sticky or have adhesive capability (e.g. inherently or from a coating) over its entire surface facing the other tapes, or it may just comprise sticky or adhesive zones. Preferably, one tape has sticky or adhesive zones and the other tape has not. This helps in trapping the debris 41, and in forming the sandwich 31. In addition, when using a first tape and a second tape, to protect the fiber when using a heater, a tape comprising no sticky or adhesive zones can be used. The heat produced by the heater preferably generates the sticky behavior of the tape which helps the trapping of the debris. In an alternative embodiment, the tape can comprise zones with adhesives, whereby said adhesives become sticky after heat activation, thus the heat activated tape remains usually tack-free until it is activated by a heat source.

In other embodiments, the first or second tape may comprise zones which are embossed, whereby said embossed zones are adapted to cover perforated zones of the other tape. The embossed zone of the first or second tape and the perforated zone of the other tape are positioned such that a sandwich can be formed when both tapes are aiding the trapping of the debris.

In one embodiment of a device as shown in Fig. 2, station 50 is a stripping station for removing at least one coating from the optical fiber. Station 50 comprises a first heater 51 and a second heater 52. Both heaters 51, 52 are used to heat the coating of the optical fiber 5 so that it can be removed more easily from the optical fiber. Tape 11 protects heater 51 from contacting the heated optical fiber 5, so that contamination of the heater 51 by residues of the heated coating is avoided. Tape 12 protects heater 52 from contacting the heated optical fiber 5, to avoid contamination of heater 52.

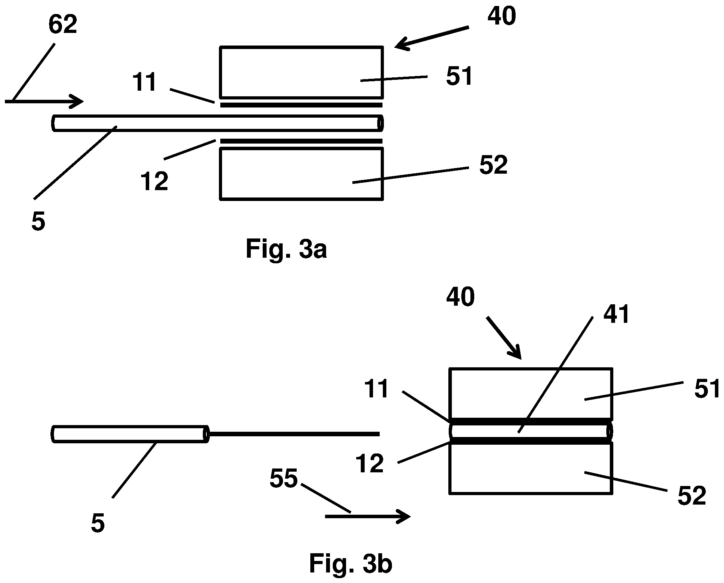

One embodiment of the stripping operation is illustrated more in detail in Figs. 3a and 3b. Figs. 3a and 3b show a schematic side view of the stripping station 40 of Fig. 2. The optical fiber 5 is inserted into the device 40 in the direction of arrow 62, and the transport direction of the tapes 11 and 21 is perpendicular to the plane of the drawing. In Fig. 3a, the optical fiber 5 is shown inserted between the heaters 51 and 52. Tapes 11 and 21 protect the heaters 51 and 52 from contacting the optical fiber 5. Then, heaters 51 and 52 are moved towards each other so that they clamp optical fiber 5, and subsequently the heaters 51, 52 are moved in the direction of arrow 55, as shown in Fig. 3b. The end of optical fiber 5 is thus stripped of at least one coating, which remains as debris 41 between the first tape 11 and the second tape 12. Heaters 51 and 52 are moved away from each other, and then movement of the tapes 11, 12 evacuates the debris as discussed above, with reference to Fig. 2. Tapes 11 and 12 are driven over a certain distance and then the tape transport is stopped, so that new tape is available at station 40, for another stripping operation.

Instead of two heaters, more heaters, or just a single heater, may be provided. The guiding elements are preferably adapted for guiding the tapes, to protect the heater, or heaters, from contacting the optical fiber. As discussed above, this prevents the heater(s) from being soiled by heated coating. The tape may thus have two functions: in evacuating the debris on the one hand, and protecting the heater(s) from contacting the optical fiber on the other hand.

If a separate tape cartridge 10 is used, device 40 is preferably adapted to receive such a tape cartridge 10. According to another aspect of the invention, the device 40 itself includes driving elements and/or guiding elements for the tapes. The guiding elements may then be adapted to trap the debris between the first and the second tape, thus forming a sandwich, as discussed above. No tape cartridge then needs to be provided; all driving and guiding elements are then provided in the device 40. Alternatively, some guiding elements for the tapes may be provided in a tape cartridge, and other guiding elements in the device. In general, guiding elements for the tapes may be provided in the device, or they may be provided in the tape cartridge, or some guiding elements may be provided in the device and others in the tape cartridge.

Driving the first and the second tape may be performed indirectly, e.g. by driving the sandwich. In such an embodiment the first or second tape are driven by driving the finished sandwich.

In Fig. 2, station 50 is equipped to perform a stripping operation. The same station may also be equipped to perform any other process involved with preparing optical fibers. Hence, the same station may also be equipped to perform a cleaning operation on the optical fiber. Alternatively, another station may be provided in the device that performs a cleaning operation. An additional station may be provided that performs a cleaving operation. In subsequent steps, these stations may be positioned at the location of the optical fiber (or, in another embodiment, the optical fiber may subsequently be positioned at the locations of the stations) so that the tapes may be used for evacuating debris from different operations, e.g. from a stripping operation and/or a cleaning operation and/or a cleaving operation. Possible positioning of these stations, as well as cleaving, is described in US Provisional Application 61/443,942 mentioned already above.

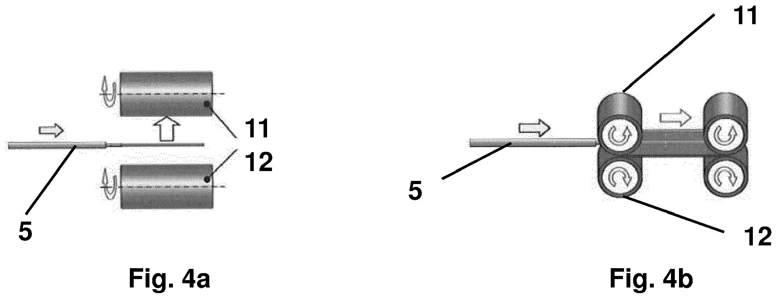

In one embodiment, a cleaning operation is performed to clean the stripped optical fiber from possibly remaining coating residues and/or processing fluids such as oils used during the production process of the fiber. The cleaning operation may be performed in the stripping unit: an additional amount of tape can be used to clean the fiber between the heaters 51, 52, e.g. by moving the heaters again along the fiber as in the stripping process. This is dry cleaning. In case the tape is used for cleaning, the adhesive tape may contain zones, e.g. of 10 mm, that are non-adhesive; these zones may then be used for cleaning. In another embodiment, additionally a small amount of isopropyl alcohol is used; for each cleaning action, such an amount can be dispensed on the tape. This is called wet cleaning. In any embodiment including cleaning a tape sandwich is used to trap any waste materials recovered from the cleaning operation.
Different orientations of the tapes are possible. The tapes 11, 12 may be guided in a direction perpendicular to the axis of the optical fiber 5, as shown in Fig. 4a. Alternatively, the tapes 11, 12 may be guided in a direction parallel to the axis of the optical fiber 5, as shown in Fig. 4b.

Fig. 2 and Figs. 3a and 3b illustrate embodiments wherein the tapes 11, 12 are guided in a direction perpendicular to the direction of the longitudinal axis of the optical fiber.

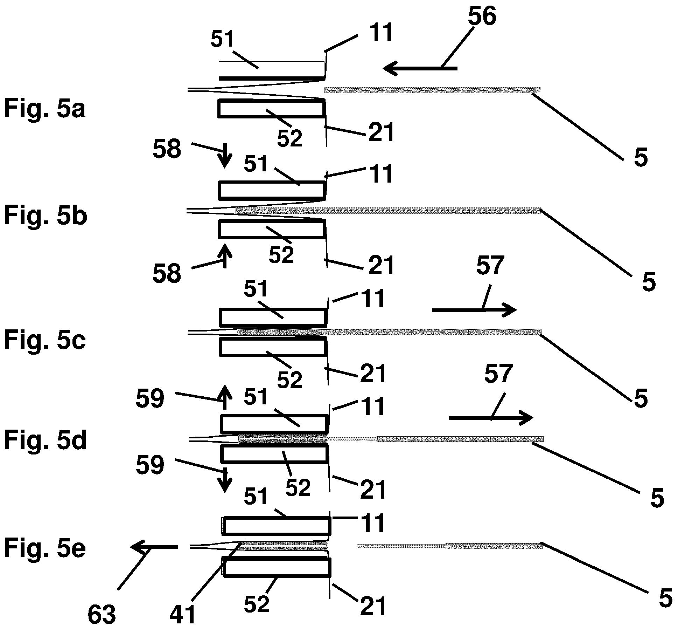

Figs. 5a to 5e schematically show an embodiment of a stripping operation in a direction parallel to the axis of the optical fiber, and the subsequent debris evacuation. In Fig. 5a, optical fiber 5 is inserted, in the direction of arrow 56, between the heaters 51 and 52 that are protected by tapes 11 and 12. The heaters 51 and 52 are moved towards each other, in the direction of arrows 58, as shown in Fig. 5b, and the coating of the optical fiber is heated (Fig. 5c). Subsequently, the optical fiber is pulled out by suitable pulling means, in the direction of arrow 57 (Figs. 5c and 5d), leaving the stripped-off coating as debris 41 between the tapes. Instead of pulling the optical fiber out, the heaters 51, 52 may be moved in the direction opposite to the direction of arrow 57; only a relative movement is required. Then, heaters 51 and 52 are moved away from each other, in the direction of arrows 59 (Fig. 5d), and finally the tapes 11 and 12 are moved in the direction of arrow 63, thus evacuating the debris 41.

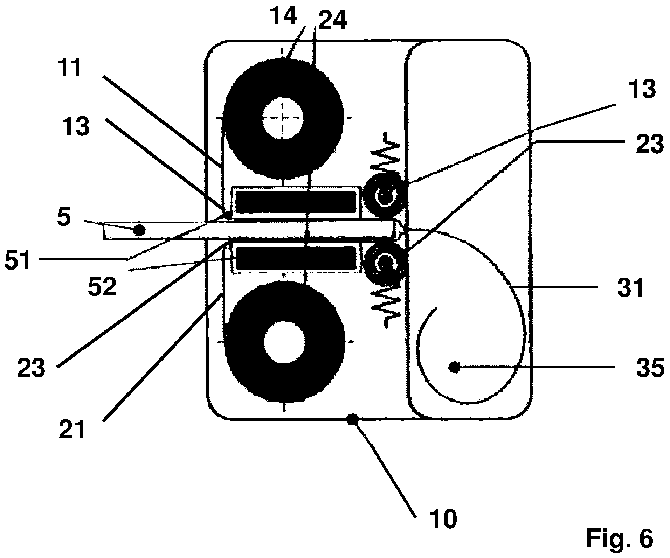

Fig. 6 schematically shows an embodiment of a tape cartridge 10 wherein the tapes 11, 12 are guided in a direction parallel to the axis of the optical fiber 5. The first tape is supplied on a first tape roller 14, and the second tape 21 is supplied on a second tape roller 24. Tape 11 is guided by a small guide roller 13 along the first heater 51 and then by driven guide roller 13, while tape 12 is guided by small guide roller 23 along second heater 52 and by driven guide roller 23. Heaters 51 and 52 preferably do not form part of the tape cartridge, but are part of the device wherein the tape cartridge 10 is inserted (inserting the tape cartridge 10 into the device may e.g. be done in the direction perpendicular to the plane of the drawing). The coating is now stripped as discussed with reference to Figs. 5a to 5e, and sandwich 31 is evacuated by pushing it (by the driven guide rollers) into compartment 35, that is preferably designed so as to allow efficient stacking of the evacuated sandwich 31. In another embodiment, there is no evacuation compartment 35, but sandwich 31 is evacuated through an evacuation opening in the tape cartridge, and cut into strips having e.g. a length of 10 cm, so that these strips fall on the ground when the device is operated. Afterwards, the operator of the device collects the strips as waste.

## Claims

1. Device for evacuating debris from an optical fiber (5), the device comprising a first guiding means for guiding a first tape (11) and a second guiding means for guiding a second tape (21),wherein the device is adapted to move the first (11) and second tapes (21) to cover the optical fiber (5) and trap the debris (41) from the optical fiber (5) between the first and second tapes (11,21) in the form of a two-tape sandwich and the device **characterized by** further comprising means for evacuating the sandwich (31) with the trapped debris (41) by winding the sandwich (31) on a take-up roller (34) or by pushing the sandwich (31) into a compartment (35).

2. Device according to claim 1, wherein said device comprises a tape cartridge (10), said tape cartridge further comprising said first tape (11) and said second tape (21).

3. Device according to any previous claim, wherein said device further comprises first driving means for driving the first tape (11) and the second tape (21);
or
first driving means for driving the first tape (11) and second driving means for driving the second tape (21).

4. Device according to any of previous claims wherein the device further comprises first means for heating (51) the optical fiber (5) and wherein said first guiding means is adapted for guiding the first tape (11) such that the first tape protects said first means for heating (51) from contacting the optical fiber (5); or
wherein the device further comprises first and second means for heating (51,52) the optical fiber (5), wherein said first guiding means is adapted for guiding the first tape (11) such that the first tape protects said first means for heating (51) from contacting the optical fiber (5) and wherein said second guiding means is adapted for guiding the second tape (21) such that the second tape (21) protects said second means for heating (52) from contacting the optical fiber (5).

5. Device according to any previous claim wherein the optical fiber (5) is a coated optical fiber, the coated optical fiber having a cladding and a core, the cladding surrounding the core and the coating surrounding the cladding, the device further comprising means for performing an operation (50) on the optical fiber (5) wherein the operation generates the debris (41) from the optical fiber (5), the operation being a stripping operation of stripping the coating from the cladding, and wherein the debris (41) is the stripped coating;
or
wherein the optical fiber (5) is a bare optical fiber, the bare optical fiber having a cladding and a core, the cladding surrounding the core, the device further comprising means for performing an operation (50) on the optical fiber wherein the operation traps and evacuates the debris from the optical fiber, the operation being a cleaning operation of cleaning the cladding;
or
wherein the optical fiber (5) is a bare optical fiber, the bare optical fiber having a cladding and a core, the cladding surrounding the core, the device further comprising means for performing an operation (50) on the optical fiber wherein the operation traps and evacuates the debris from the optical fiber, the operation being a cleaving operation of cleaving a portion of the bare optical fiber, and wherein the debris is the portion of the bare optical fiber;
or
wherein the optical fiber (5) is a coated optical fiber, the coated optical fiber having a cladding and a core, the cladding surrounding the core and the coating surrounding the cladding, the device further comprising first means for performing a first operation on the optical fiber wherein the operation (50) generates first debris (41) from the optical fiber, the first operation being a stripping operation of stripping the coating from the cladding, thus obtaining a bare optical fiber, and wherein the first debris is the stripped coating; the device further comprising second means for performing a second operation on the bare optical fiber
wherein the operation traps and evacuates second debris from the bare optical fiber, the operation being a cleaning operation of cleaning the cladding, and wherein the second debris is removed by the cleaning operation;
or
wherein the optical fiber is a coated optical fiber, the coated optical fiber having a cladding and a core, the cladding surrounding the core and the coating surrounding the cladding, the device further comprising first means for performing a first operation on the optical fiber wherein the operation generates first debris from the optical fiber, the first operation being a stripping operation of stripping the coating from the cladding, thus obtaining a bare optical fiber, and wherein the first debris is the stripped coating; the device further comprising second means for performing a second operation on the bare optical fiber wherein the operation traps and evacuates second debris from the bare optical fiber, the operation being a cleaning operation of cleaning the cladding, and
wherein the second debris is removed by the cleaning operation; the device further comprising third means for performing a third operation on the bare optical fiber wherein the operation traps and evacuates third debris from the bare optical fiber, the operation being a cleaving operation of cleaving a portion of the bare optical fiber, and wherein the third debris is the portion of the bare optical fiber.

6. Device according to any previous claim wherein the first (11) and/or second tape (21) has sticky or adhesive zones for contacting the other tape.

7. Device according to any one of claims 1 to 6, wherein the optical fiber (5) has a longitudinal axis and wherein said first guiding means is for guiding the first tape (11) in an axial direction parallel to the fiber axis and said second guiding means is for guiding the second tape (21) in the direction of the longitudinal axis,
or
wherein the optical fiber (5) has a fiber axis and wherein said first guiding means is for guiding said first tape (11) in a direction perpendicular to the longitudinal axis and said second guiding means is for guiding the second tape (21) in the perpendicular direction.

8. Method for evacuating debris (41) from an optical fiber (5), using the device according to any of claims 1-7, the method comprising the steps of:
- covering the optical fiber (5) with the a first tape (11) and the second tape (21);
- trapping the debris (41) between the first tape (11) and the second tape (21), in the form of a two-tape sandwich (31);
- driving the first and second tapes (11, 21) or the two-tape sandwich (31), thus evacuating the two-tape sandwich (31) with the trapped debris (41).

9. Method according to claim 8, further comprising collecting the sandwich.

10. Method according to any one of claims 8 to 9 further comprising the steps of:
- heating the optical fiber by a heater (51);
- protecting the heater (51) by one tape (11) or by the first (11) and second tape (21) from contacting the optical fiber (5).

11. Method according to any one of claims 8 to 10 further comprising contacting the first (11) or second tape (21) by a sticky zone of the other tape.

12. Method according to any one of claims 8 to 11 further comprising the steps of:
- removing a coating from the optical fiber (5) by the first and second tapes (11, 21);
- trapping and covering the coating between one tape (11) or by the first and second tape (11,21);
- evacuating the coating between the first and second tapes (11, 21).

13. Method according to any one of claims 8 to 12 further comprising the step of:
- cleaning a cladding of the optical fiber (5) by the first (11) and second tape (21), thus trapping the debris of the optical fiber and evacuating the debris between the first (11) and second tape (21).

14. Method according to claim 13 further comprising the steps of:
- cleaving the optical fiber (5), producing a portion of a cladding covered core;
- trapping the portion between the first and second tapes (11, 21);
- evacuating the portion between the first and second tape (11, 21).

## Patentansprüche

1. Vorrichtung zum Entfernen von Trümmermaterial von einer optischen Faser (5), wobei die Vorrichtung ein erstes Führungsmittel zum Führen eines ersten Bandes (11) und ein zweites Führungsmittel zum Führen eines zweiten Bandes (21) umfasst, wobei die Vorrichtung derart eingerichtet ist, um das erste und zweite Band (11, 21) zu bewegen, um die optische Faser (5) zu bedecken und das Trümmermaterial (41) von der optischen Faser (5) zwischen dem ersten und zweiten Band (11, 21) in Form eines Zwei-Bänder-Sandwiches (31) einzuschließen, **dadurch gekennzeichnet, dass** die Vorrichtung ferner Mittel zum Entfernen des Sandwiches (31) mit dem eingeschlossenen Trümmermaterial (41) umfasst, indem das Sandwich (31) auf einer Aufnahmerolle (34) aufgewickelt wird oder das Sandwich (31) in ein Fach (35) geschoben wird.

2. Vorrichtung nach Anspruch 1, wobei die Vorrichtung eine Bandkassette (10) umfasst, wobei die Bandkassette ferner das erste Band (11) und das zweite Band (21) umfasst.

3. Vorrichtung nach einem der vorhergehenden Ansprüche, wobei die Vorrichtung ferner erste Antriebsmittel zum Antreiben des ersten Bandes (11) und des zweiten Bandes (21) umfasst; oder
erste Antriebsmittel zum Antreiben des ersten Bandes (11) und zweite Antriebsmittel zum Antreiben des zweiten Bandes (21).

4. Vorrichtung nach einem der vorhergehenden Ansprüche, wobei die Vorrichtung ferner erste Mittel zum Erwärmen (51) der optischen Faser (5) umfasst, und wobei das erste Führungsmittel eingerichtet ist, um das erste Band (11) so zu führen, dass das erste Band das erste Mittel zum Erwärmen (51) vor dem Kontaktieren der optischen Faser (5) schützt; oder
wobei die Vorrichtung ferner erste und zweite Mittel zum Erwärmen (51, 52) der optischen Faser (5) umfasst, wobei das erste Führungsmittel eingerichtet ist, um das erste Band (11) so zu führen, dass das erste Band das erste Mittel zum Erwärmen (51) vor dem Kontaktieren der optischen Faser (5) schützt, und wobei das zweite Führungsmittel eingerichtet ist, um das zweite Band (21) so zu führen, dass das zweite Band (21) das zweite Mittel zum Erwärmen (52) vor dem Kontaktieren der optischen Faser (5) schützt.

5. Vorrichtung nach einem der vorhergehenden Ansprüche, wobei die optische Faser (5) eine beschichtete optische Faser ist, die beschichtete optische Faser einen Mantel und einen Kern aufweist, der Mantel den Kern umgibt und die Beschichtung den Mantel umgibt, wobei die Vorrichtung ferner Mittel zum Durchführen eines Vorgangs (50) auf der optischen Faser (5) umfasst, wobei der Vorgang das Trümmermaterial (41) von der optischen Faser (5) generiert, wobei der Vorgang ein Strippvorgang ist, in dem die Beschichtung von dem Mantel gestrippt wird, und wobei das Trümmermaterial (41) die gestrippte Beschichtung ist; oder
wobei die optische Faser (5) eine bloße optische Faser ist, die bloße optische Faser einen Mantel und einen Kern aufweist, der Mantel den Kern umgibt, wobei die Vorrichtung ferner Mittel zum Durchführen eines Vorgangs (50) an der optischen Faser umfasst, wobei der Vorgang das Trümmermaterial von der optischen Faser umschließt und entfernt, wobei der Vorgang ein Reinigungsvorgang des Reinigens des Mantels ist; oder
wobei die optische Faser (5) eine bloße optische Faser ist, die bloße optische Faser einen Mantel und einen Kern aufweist, der Mantel den Kern umgibt, wobei die Vorrichtung ferner Mittel zum Durchführen eines Vorgangs (50) an der optischen Faser umfasst, wobei der Vorgang das Trümmermaterial von der optischen Faser umschließt und entfernt, wobei der Vorgang ein Trennvorgang des Trennens eines Abschnitts der bloßen optischen Faser ist, und wobei das Trümmermaterial der Abschnitt der bloßen optischen Faser ist; oder
wobei die optische Faser (5) eine beschichtete optische Faser ist, die beschichtete optische Faser einen Mantel und einen Kern aufweist, der Mantel den Kern umgibt und die Beschichtung den Mantel umgibt, die Vorrichtung ferner erste Mittel zum Durchführen eines ersten Vorgangs an der optischen Faser umfasst, wobei der Vorgang (50) erstes Trümmermaterial (41) von der optischen Faser generiert, wobei der erste Vorgang ein Strippvorgang des Strippens der Beschichtung von dem Mantel ist, wodurch eine bloße optische Faser erhalten wird, und wobei das erste Trümmermaterial die gestrippte Beschichtung ist; wobei die Vorrichtung ferner zweite Mittel zum Durchführen eines zweiten Vorgangs an der bloßen optischen Faser umfasst,
wobei der Vorgang zweites Trümmermaterial von der bloßen optischen Faser umschließt und entfernt, wobei der Vorgang ein Reinigungsvorgang des Reinigens des Mantels ist, und wobei das zweite Trümmermaterial durch den Reinigungsvorgang beseitigt wird; oder
wobei die optische Faser eine beschichtete optische Faser ist, die beschichtete optische Faser einen Mantel und einen Kern aufweist, der Mantel den Kern umgibt und die Beschichtung den Mantel umgibt, wobei die Vorrichtung ferner erste Mittel zum Durchführen eines ersten Vorgangs an der optischen Faser umfasst, wobei der Vorgang erstes Trümmermaterial von der optischen Faser generiert, wobei der erste Vorgang ein Strippvorgang des Strippens der Beschichtung von dem Mantel ist, wodurch eine bloße optische Faser erhalten wird, und wobei das erste Trümmermaterial die gestrippte Beschichtung ist; wobei die Vorrichtung ferner zweite Mittel zum Durchführen eines zweiten Vorgangs an der bloßen optischen Faser umfasst, wobei der Vorgang zweites Trümmermaterial von der bloßen optischen Faser umschließt und entfernt, wobei der Vorgang ein Reinigungsvorgang des Reinigens des Mantels ist, und
wobei das zweite Trümmermaterial durch den Reinigungsvorgang beseitigt wird; wobei die Vorrichtung ferner dritte Mittel zum Durchführen eines dritten Vorgangs an der bloßen optischen Faser umfasst, wobei der Vorgang drittes Trümmermaterial von der bloßen optischen Faser umschließt und entfernt, wobei der Vorgang ein Trennvorgang des Trennens eines Abschnitts der bloßen optischen Faser ist, und wobei das dritte Trümmermaterial der Abschnitt der bloßen optischen Faser ist.

6. Vorrichtung nach einem der vorhergehenden Ansprüche, wobei das erste (11) und/oder zweite Band (21) klebrige oder haftende Zonen zum Kontaktieren des anderen Bandes aufweist bzw. aufweisen.

7. Vorrichtung nach einem der Ansprüche 1 bis 6, wobei die optische Faser (5) eine Längsachse aufweist, und wobei das erste Führungsmittel zum Führen des ersten Bandes (11) in eine axiale Richtung parallel zu der Faserachse dient und das zweite Führungsmittel zum Führen des zweiten Bandes (21) in Richtung der Längsachse dient, oder wobei die optische Faser (5) eine Faserachse aufweist, und wobei das erste Führungsmittel zum Führen des ersten Bandes (11) in eine Richtung senkrecht zu der Längsachse dient und das zweite Führungsmittel zum Führen des zweiten Bandes (21) in der senkrechten Richtung dient.

8. Verfahren zum Entfernen von Trümmermaterial (41) von einer optischen Faser (5) unter Verwendung der Vorrichtung gemäß einem der Ansprüche 1 bis 7, wobei das Verfahren die Schritte umfasst:
- Bedecken der optischen Faser (5) mit dem ersten Band (11) und dem zweiten Band (21);
- Umschließen des Trümmermaterials (41) zwischen dem ersten Band (11) und dem zweiten Band (21) in Form eines Zwei-Bänder-Sandwiches (31);
- Antreiben der ersten und zweiten Bänder (11, 21) oder des Zwei-Bänder-Sandwiches (31), wodurch das Zwei-Bänder-Sandwich (31) mit dem umschlossenen Trümmermaterial (41) entfernt wird.

9. Verfahren nach Anspruch 8, ferner umfassend Auffangen des Sandwiches.

10. Verfahren nach einem der Ansprüche 8 bis 9, ferner umfassend die Schritte:
- Erwärmen der optischen Faser durch einen Heizer (51) ;
- Schützen des Heizers (51) durch ein Band (11) oder durch das erste (11) und zweite Band (21) vor dem Kontaktieren der optischen Faser (5).

11. Verfahren nach einem der Ansprüche 8 bis 10, ferner umfassend Kontaktieren des ersten (11) oder zweiten Bandes (21) durch eine klebrige Zone des anderen Bandes.

12. Verfahren nach einem der Ansprüche 8 bis 11, ferner umfassend die Schritte:
- Beseitigen einer Beschichtung von der optischen Faser (5) durch das erste und zweite Band (11, 21) ;
- Umschließen und Bedecken der Beschichtung zwischen einem Band (11) oder durch das erste und das zweite Band (11, 21);
- Entfernen der Beschichtung zwischen dem ersten und zweiten Band (11, 21).

13. Verfahren nach einem der Ansprüche 8 bis 12, ferner umfassend den Schritt:
- Reinigen eines Mantels der optischen Faser (5) durch das erste (11) und zweite Band (21), wodurch das Trümmermaterial der optischen Faser umschlossen wird, und Entfernen des Trümmermaterials zwischen dem ersten (11) und zweiten Band (21).

14. Verfahren nach Anspruch 13, ferner umfassend die Schritte:
- Trennen der optischen Faser (5), wodurch ein Abschnitt eines mantelbedeckten Kerns produziert wird;
- Umschließen des Abschnitts zwischen dem ersten und zweiten Band (11, 21);
- Entfernen des Abschnitts zwischen dem ersten und zweiten Band (11, 21).

## Revendications

1. Dispositif destiné à évacuer des débris d'une fibre optique (5), le dispositif comprenant un premier moyen de guidage pour guider un premier ruban (11) et un deuxième moyen de guidage pour guider un deuxième ruban (21), où le dispositif en ce qu'il est adapté pour déplacer les premier et deuxième rubans (11, 21) pour recouvrir la fibre optique (5), et piéger les débris (41) issus de la fibre optique (5) entre les premier et deuxième rubans (11, 21) sous la forme d'un sandwich (31) à deux rubans , et le dispositif **caractérisé par** comprenant en outre des moyens pour évacuer le sandwich (31) avec les débris piégés (41) en enroulant le sandwich (31) sur un cylindre récepteur (34) ou en poussant le sandwich (31) dans un compartiment (35).

2. Dispositif selon revendication 1, ledit dispositif comprenant une cartouche de ruban (10), ladite cartouche de ruban comprenant en outre ledit premier ruban (11) et ledit deuxième ruban (21).

3. Dispositif selon une quelconque revendication précédente, ledit dispositif comprenant en outre des premiers moyens d'entraînement pour entraîner le premier ruban (11) et le deuxième ruban (21) ;
ou
des premiers moyens d'entraînement pour entraîner le premier ruban (11) et des deuxièmes moyens d'entraînement pour entraîner le deuxième ruban (21).

4. Dispositif selon l'une quelconque des revendications précédentes, ledit dispositif comprenant en outre des premiers moyens de chauffage (51) de la fibre optique (5), et dans lequel ledit premier moyen de guidage est adapté pour guider le premier ruban (11) de telle sorte que le premier ruban protège lesdits premiers moyens de chauffage (51) d'un contact avec la fibre optique (5) ; ou
le dispositif comprenant en outre des premiers et deuxièmes moyens de chauffage (51, 52) de la fibre optique (5), dans lequel ledit premier moyen de guidage est adapté pour guider le premier ruban (11) de telle sorte que le premier ruban protège lesdits premiers moyens de chauffage (51) d'un contact avec la fibre optique (5) et dans lequel ledit deuxième moyen de guidage est adapté pour guider le deuxième ruban (21) de telle sorte que le deuxième ruban (21) protège lesdits deuxièmes moyens de chauffage (52) d'un contact avec la fibre optique (5).

5. Dispositif selon une quelconque revendication précédente dans lequel la fibre optique (5) est une fibre optique revêtue, la fibre optique revêtue ayant une gaine et une âme, la gaine entourant l'âme et le revêtement entourant la gaine, le dispositif comprenant en outre des moyens pour effectuer une opération (50) sur la fibre optique (5), l'opération générant les débris (41) issus de la fibre optique (5), l'opération étant une opération de décapage consistant à décaper le revêtement de la gaine, et les débris (41) étant le revêtement décapé ;
ou
dans lequel la fibre optique (5) est une fibre optique nue, la fibre optique nue ayant une gaine et une âme, la gaine entourant l'âme, le dispositif comprenant en outre des moyens pour effectuer une opération (50) sur la fibre optique, l'opération piégeant et évacuant les débris de la fibre optique, l'opération étant une opération de nettoyage consistant à nettoyer la gaine ;
ou
dans lequel la fibre optique (5) est une fibre optique nue, la fibre optique nue ayant une gaine et une âme, la gaine entourant l'âme, le dispositif comprenant en outre des moyens pour effectuer une opération (50) sur la fibre optique, l'opération piégeant et évacuant les débris de la fibre optique, l'opération étant une opération de clivage consistant à cliver une partie de la fibre optique nue, et les débris étant la partie de la fibre optique nue ;
ou
dans lequel la fibre optique (5) est une fibre optique revêtue, la fibre optique revêtue ayant une gaine et une âme, la gaine entourant l'âme et le revêtement entourant la gaine, le dispositif comprenant en outre des premiers moyens pour effectuer une première opération sur la fibre optique, l'opération (50) générant des premiers débris (41) issus de la fibre optique, la première opération étant une opération de décapage consistant à décaper le revêtement de la gaine, pour obtenir ainsi une fibre optique nue, et les premiers débris étant le revêtement décapé ; le dispositif comprenant en outre des deuxièmes moyens pour effectuer une deuxième opération sur la fibre optique nue, l'opération piégeant et évacuant des deuxièmes débris de la fibre optique nue, l'opération étant une opération de nettoyage consistant à nettoyer la gaine, et les deuxièmes débris étant retirés par l'opération de nettoyage ;
ou
dans lequel la fibre optique est une fibre optique revêtue, la fibre optique revêtue ayant une gaine et une âme, la gaine entourant l'âme et le revêtement entourant la gaine, le dispositif comprenant en outre des premiers moyens pour effectuer une première opération sur la fibre optique, l'opération générant des premiers débris issus de la fibre optique, la première opération étant une opération de décapage consistant à décaper le revêtement de la gaine, pour obtenir ainsi une fibre optique nue, et les premiers débris étant le revêtement décapé ; le dispositif comprenant en outre des deuxièmes moyens pour effectuer une deuxième opération sur la fibre optique nue, l'opération piégeant et évacuant des deuxièmes débris de la fibre optique nue, l'opération étant une opération de nettoyage consistant à nettoyer la gaine, et les deuxièmes débris étant retirés par l'opération de nettoyage ; le dispositif comprenant en outre des troisièmes moyens pour effectuer une troisième opération sur la fibre optique nue, l'opération piégeant et évacuant des troisièmes débris de la fibre optique nue, l'opération étant une opération de clivage consistant à cliver une partie de la fibre optique nue, et les troisièmes débris étant la partie de la fibre optique nue.

6. Dispositif selon une quelconque revendication précédente dans lequel le premier (11) et/ou le deuxième ruban (21) ont des zones collantes ou adhésives destinées à entrer en contact avec l'autre ruban.

7. Dispositif selon l'une quelconque des revendications 1 à 6, dans lequel la fibre optique (5) a un axe longitudinal et dans lequel ledit premier moyen de guidage sert à guider le premier ruban (11) dans une direction axiale parallèle à l'axe de fibre et ledit deuxième moyen de guidage sert à guider le deuxième ruban (21) dans la direction de l'axe longitudinal,
ou
dans lequel la fibre optique (5) a un axe de fibre et dans lequel ledit premier moyen de guidage sert à guider le premier ruban (11) dans une direction perpendiculaire à l'axe longitudinal et ledit deuxième moyen de guidage sert à guider le deuxième ruban (21) dans la direction perpendiculaire.

8. Procédé d'évacuation de débris (41) d'une fibre optique (5), utilisant le dispositif selon l'une quelconque des revendications 1 à 7, le procédé comprenant les étapes consistant à :
- recouvrir la fibre optique (5) avec le premier ruban (11) et le deuxième ruban (21) ;
- piéger les débris (41) entre le premier ruban (11) et le deuxième ruban (21), sous la forme d'un sandwich à deux rubans (31) ;
- entraîner les premier et deuxième rubans (11, 21) ou le sandwich à deux rubans (31), pour évacuer ainsi le sandwich à deux rubans (31) avec les débris piégés (41).

9. Procédé selon la revendication 8, comprenant en outre la collecte du sandwich

10. Procédé selon l'une quelconque des revendications 8 à 9 comprenant en outre les étapes consistant à :
- chauffer la fibre optique avec un élément chauffant (51) ;
- protéger l'élément chauffant (51) avec un ruban (11) ou avec le premier (11) et le deuxième ruban (21) d'un contact avec la fibre optique (5).

11. Procédé selon l'une quelconque des revendications 8 à 10 comprenant en outre la mise en contact du premier (11) ou du deuxième ruban (21) avec une zone collante de l'autre ruban.

12. Procédé selon l'une quelconque des revendications 8 à 11 comprenant en outre les étapes consistant à :
- retirer un revêtement de la fibre optique (5) avec les premier et deuxième rubans (11, 21) ;
- piéger et recouvrir le revêtement entre un ruban (11) ou avec le premier et le deuxième ruban (11, 21) ;
- évacuer le revêtement entre les premier et deuxième rubans (11, 21).

13. Procédé selon l'une quelconque des revendications 8 à 12 comprenant en outre l'étape consistant à :
- nettoyer une gaine de la fibre optique (5) avec le premier (11) et le deuxième ruban (21), pour piéger ainsi les débris de la fibre optique et évacuer les débris entre le premier (11) et le deuxième ruban (21).

14. Procédé selon la revendication 13 comprenant en outre les étapes consistant à :
- cliver la fibre optique (5), pour produire une partie d'une âme recouverte d'une gaine ;
- piéger la partie entre les premier et deuxième rubans (11, 21) ;
- évacuer la partie entre le premier et le deuxième ruban (11, 21).
